# EUROPÄISCHE PATENTSCHRIFT

(11) **EP 3 524 331 B1**
(45) Veröffentlichungstag und Bekanntmachung des Hinweises auf die Patenterteilung: **22.05.2024**
(21) Anmeldenummer: 18156079.8
(22) Anmeldetag: 09.02.2018
(51) Int. Cl.: B01D 1/22, B01D 3/12, B01J 19/18, B01J 19/20

(54) **VORRICHTUNG ZUR THERMISCHEN BEHANDLUNG VON VISKOSEM MATERIAL, INSBESONDERE ZUR THERMISCHEN AUFTRENNUNG VON IN VISKOSEM MATERIAL ENTHALTENEN MATERIALKOMPONENTEN**
DEVICE FOR THE THERMAL TREATMENT OF VISCOUS MATERIAL, PARTICULARLY FOR THERMAL SEPARATION OF MATERIAL COMPONENTS CONTAINED IN VISCOUS MATERIAL
DISPOSITIF DE TRAITEMENT THERMIQUE DE MATIÈRE VISQUEUSE, EN PARTICULIER DE SÉPARATION THERMIQUE DE COMPOSANTS DE MATIÈRE CONTENUS DANS LA MATIÈRE VISQUEUSE

(43) Veröffentlichungstag der Anmeldung: 14.08.2019
(73) Patentinhaber: Buss-SMS-Canzler GmbH, 35510 Butzbach (DE); Wacker Chemie AG, 81737 München (DE)
(72) Erfinder: NAEF, Rainer, 8953 Dietikon (CH); SCHUSTER, Johann, 81737 München (DE); BECKER, Nils, 81737 München (DE)
(74) Vertreter: Schaad, Balass, Menzl & Partner AG

(56) Entgegenhaltungen:
- EP-A1- 2 147 708
- AT-A1- 505 461
- CH-A- 453 297
- DE-A1- 10 024 418
- DE-A1- 19 535 817
- JP-A- H06 182 101

## Beschreibung

Die Erfindung betrifft eine Vorrichtung zur thermischen Behandlung von viskosem Material, insbesondere zur thermischen Auftrennung von in viskosem Material enthaltenen Materialkomponenten, gemäss dem Oberbegriff des Anspruchs 1, und insbesondere einen Kurzwegverdampfer.

Kurzwegverdampfer werden zur thermischen Behandlung von temperaturempfindlichen Materialien eingesetzt mit dem Ziel, das Material zu konzentrieren oder zu entgasen bzw. die dabei aus dem Material entweichenden gasförmigen Materialkomponenten wahlweise zu destillieren.

Das Prinzip der Kurzwegverdampfung beruht darauf, dass ein dem Verdampfer zugeführtes Stoffgemisch, welches im Folgenden als "Material" bezeichnet wird, an einer eine Verdampfungsfläche bildenden Behandlungsfläche erhitzt wird und die dabei entweichenden gasförmigen Materialkomponenten an einer der Verdampfungsfläche gegenüberliegenden Kondensatorfläche kondensieren. Dabei wird der Abstand zwischen der Verdampfungsfläche und der Kondensatorfläche sehr gering gewählt, um Druckverluste über den Weg von der Verdampfungsfläche zur Kondensatorfläche zu minimieren. Dies erlaubt es, in Kurzverdampfern mit sehr niedrigen Betriebsdrücken bis 0,001 mbar und entsprechend niedrigen Siedetemperaturen zu arbeiten.

Beispielhafte Kurzwegverdampfer werden etwa in der EP 2 039 408 A1 und der EP 2 039 409 A1 beschrieben.

So wird in EP 2 039 408 A1 konkret ein Kurzwegverdampfer beschrieben, welcher oberhalb des Kondensators eine scheibenförmige, um die Längsachse des Gehäuses drehbare und während des Betriebs rotierende Rotorplatte aufweist, an deren peripherem Randbereich eine Aufhängung angeordnet ist mit daran umlaufend angeordneten Verteilungsmitteln zur Verteilung des zugeführten Materials auf der Verdampfungsfläche. Konkret können diese Verteilungsmittel gemäss der EP 2 039 408 in Form von Wischblättern vorliegen, welche in Umfangsrichtung in regelmässigen Abständen und in axialer Richtung derart versetzt zueinander angeordnet sind, dass sie auf einer um die Längsachse herum verlaufenden Spirale liegen.

Die in EP 2 039 408 A1 und EP 2 039 409 A1 beschriebenen Kurzwegverdampfer sind auf relative tiefviskose Stoffgemische ausgelegt, welche auf der Verdampfungsfläche aufgrund der Gravitation nach unten fliessen und auf diesem Weg permanent auf der Verdampfungsfläche ausgestrichen werden, wodurch die Verweilzeit erhöht wird.

Weiter wird in DE 1 444 326 A eine Vorrichtung zum Verdampfen, Trennen oder Destillieren von Flüssigkeiten mit einer beheizten, zu einer vertikalen Achse rotationssymmetrischen Trägerfläche beschrieben, auf welcher die Flüssigkeit in dünner Schicht nach unten fliessen kann. Dabei wird zum Ausbreiten der Flüssigkeitsschicht auf der Trägerfläche ein Streichorgan vorgesehen, welches schraubenlinienförmig verläuft, um die Achse drehbar ist und während der Rotationsbewegung in axiale Schwingungen versetzt wird, die in der Flüssigkeitsschicht Interferenzwellen erzeugen.

Allerdings sind die in EP 2 039 408 A1, EP 2 039 409 A1 und DE 1 444 326 beschriebenen Kurzwegdampfer für Materialien bzw. Stoffgemische mit hoher Viskosität nicht oder nur beschränkt geeignet. So liegt die Viskositätsobergrenze für konventionelle Kurzwegverdampfer üblicherweise bei ca. 25 Pas, da gewährleistet sein muss, dass das zu behandelnde Gut unter Einwirkung der Schwerkraft nach unten fliessen kann.

Mit der thermischen Behandlung hochviskoser Produkte unter gleichzeitiger Gewährleistung einer gleichmässigen Verteilung des zu behandelnden Guts auf der Behandlungsfläche befasst sich die DE 195 35 817 A1. In diesem Zusammenhang wird eine Vorrichtung beschrieben, welche ein Kernrohr aufweist, an dem parallel zur Rotorachse angeordnete, winkelförmige Stegbleche angeschweisst sind, an deren Aussenseite Blattelemente schraubenförmig angeordnet sind. Obschon damit im Vergleich zu den oben beschriebenen Verteilelementen bzw. Streichorganen die Verweilzeit von viskosem Material verkürzt werden kann, ist die Vorrichtung für die Behandlung von sehr hochviskosen Materialien, insbesondere Materialien mit einer Viskosität weit höher als 25 Pas, nur beschränkt geeignet.

Aufgabe der Erfindung ist es somit, eine Vorrichtung zur thermischen Behandlung von Material, insbesondere zur thermischen Auftrennung von im Material enthaltenen Materialkomponenten, zur Verfügung zu stellen, welche es erlaubt, für temperaturempfindliche Materialien auch dann eine gute Auftrennung von im Material enthaltenen Materialkomponenten zu erzielen, wenn das Material eine sehr hohe Viskosität aufweist, insbesondere eine Viskosität höher als 100 Pas, im Speziellen höher als 1'000 Pas.

Die erfindungsgemässe Aufgabe wird gelöst durch die Vorrichtung nach Anspruch 1. Bevorzugte Ausführungsformen sind in den abhängigen Ansprüchen wiedergegeben.

Wie eingangs erwähnt ist die Vorrichtung auf die thermische Behandlung von viskosem Material, insbesondere auf die thermische Auftrennung von in viskosem Material enthaltenen Materialkomponenten ausgerichtet. Sie betrifft insbesondere einen Kurzwegverdampfer.

Die Vorrichtung umfasst ein Gehäuse mit einem beheizbaren Gehäusemantel, welcher eine Behandlungskammer umschliesst und eine rotationssymmetrische, sich in Achsrichtung erstreckende Behandlungsfläche bildet. Die Vorrichtung ist typischerweise vertikal ausgerichtet; die Achsrichtung, auf die im Rahmen der vorliegenden Erfindung Bezug genommen wird, entspricht somit in der Regel der Vertikalen.

In einem Einlassbereich des Gehäuses ist ein Materialeinlass zum Einführen des zu behandelnden Materials in die Behandlungskammer angeordnet, während in einem Auslassbereich des Gehäuses ein Materialauslass zum Austragen des Materials aus der Behandlungskammer angeordnet ist. Dieser Materialauslass ist bei der vertikal ausgerichteten Vorrichtung somit in einem unteren Bereich des Gehäuses angeordnet, während der Materialeinlass weiter oben angeordnet ist.

Die Vorrichtung weist zudem einen in der Behandlungskammer angeordneten und sich koaxial erstreckenden, antreibbaren Rotor zur Erzeugung eines Materialfilms auf der Behandlungsfläche auf, wobei der Rotor eine Hohlwelle umfasst, über deren Umfang verteilt Streichelemente angeordnet sind, deren radial äusserstes, d.h. peripheres, Ende von der Behandlungsfläche beabstandet ist. Typischerweise liegt der Abstand des peripheren Endes der Streichelemente und der Behandlungsfläche im Bereich von ca. 1 bis 5 mm, wobei er in manchen Fällen, insbesondere bei sehr grossvolumigen Vorrichtungen, bis zu 8 mm betragen kann.

Die Hohlwelle umschliesst einen Kondensationsraum, in welchem ein in der Regel statischer Kondensator angeordnet ist, und weist Durchlassöffnungen auf, durch welche bei der thermischen Behandlung aus dem Material entweichende gasförmige Materialkomponenten in den Kondensationsraum gelangen können. Die Hohlwelle ist in der Regel zylinderförmig, insbesondere kreiszylinderförmig, ausgestaltet, wobei die Durchlassöffnungen in der Zylindermantelfläche angeordnet sind.

Die Streichelemente sind mindestens teilweise als Förderelemente ausgestaltet, welche dem Material eine Förderkomponente in Richtung vom Materialeinlass zum Materialauslass hin, d.h. in der Regel nach unten, verleihen.

Gemäss der Erfindung sind mindestens in einem Längsabschnitt des Rotors, insbesondere in einem zentralen Längsabschnitt, die Streichelemente teilweise als Förderelemente ausgestaltet und teilweise als von der Hohlwelle abstehende Verteilelemente, welche Zähne umfassen, deren Scherkante bezogen zur Achsrichtung einen Winkel kleiner als 45° einschliesst.

Erfindungsgemäss liegen somit Streichelemente vor, denen primär eine Förderfunktion zukommt und die somit ein Förderelement bilden, und Streichelemente, die in erster Linie eine Verteilfunktion übernehmen und somit Verteilelemente bilden.

Aufgrund des Vorliegens der Förderelemente wird einerseits gewährleistet, dass auch sehr hochviskose Materialien mit einer ausreichend hohen Förderrate durch die Behandlungskammer hindurch gefördert werden und somit die Verweilzeit bzw. die Behandlungsdauer, während welcher das Material erhöhten Temperaturen und hohen Scherraten ausgesetzt wird, ausreichend tief gehalten werden kann. Andererseits wird durch das Vorliegen der Verteilelemente eine sehr gute Verteilung und eine optimale Oberflächenerneuerung auf der Behandlungsfläche auch dann gewährleistet, wenn das Material eine sehr hohe Viskosität aufweist.

Letztendlich kann somit erfindungsgemäss eine optimale Behandlung, insbesondere eine hohe Entgasungsrate, von sehr hochviskosem Material erzielt werden und gleichzeitig der Energieeintrag in das Material auf ein Mass beschränkt werden, bei dem das Material keinen Schaden nimmt und insbesondere kein thermisch bedingter Abbau erfolgt.

Die erfindungsgemässe Vorrichtung erlaubt es somit, Materialien mit einer Viskosität von bis zu 15'000 Pas optimal zu behandeln, insbesondere zu entgasen und in manchen Fällen auch zu reagieren, sei es in Kombination mit der Entgasung oder unabhängig davon. Im Speziellen eignet sich die erfindungsgemässe Vorrichtung für die Behandlung sehr hochviskoser Polymere, bei welchen nach der Polymerisationsreaktion noch im Polymerisat enthaltene Lösemittel und/oder überschüssige oder während einer Reaktion unerwünscht gebildete Monomere oder Oligomere mit relativ hohem Siedepunkt abzutrennen sind.

In besonderem Masse vorteilhaft ist die erfindungsgemässe Vorrichtung für die Behandlung von Polymeren auf der Basis von nachwachsenden Rohstoffen, da diese im Allgemeinen relativ temperaturempfindlich sind. Die erfindungsgemässe Vorrichtung ist insbesondere auch für die Behandlung von Polymeren und hochviskosen Materialien vorteilhaft, die für Anwendungen im Bereich der Medizin, Kosmetik und Lebensmitteltechnologie einen besonders hohen Grad an Entgasung aufweisen sollen. Wie erwähnt ist die Vorrichtung gerade zur Behandlung von relativ temperaturempfindlichen Materialien besonders gut geeignet, weil die Wärmeenergie, der das Material ausgesetzt wird, durch die relativ tief wählbare Temperatur und Verweilzeit auf der Behandlungsfläche, optimal eingestellt werden kann.

Typischerweise liegt die Viskosität des mit der erfindungsgemässen Vorrichtung zu behandelnden Materials im Bereich von 100 bis 15'000 Pas, insbesondere von 1'000 Pas bis 10'000 Pas und im Speziellen von 1'500 Pas bis 6'000 Pas. Die Viskositätswerte beziehen sich dabei auf die Betriebstemperatur und ein Schergefälle von D=10 sec⁻¹.

Was die Betriebstemperatur der erfindungsgemässen Vorrichtung betrifft, so liegt diese im Allgemeinen in einem Bereich von 40 bis 400°C, insbesondere von 150 bis 350°C und im Speziellen von 20 bis 300°C.

Das anspruchsgemässe Merkmale, dass die Streichelemente "mindestens in einem Längsabschnitt des Rotors" teilweise als Förderelemente und teilweise als Verteilelemente ausgebildet sind, bedeutet, dass von der Erfindung Ausführungsformen umfasst sind, in welcher diese Ausbildung der Streichelemente über die gesamte Länge des Rotors verwirklicht ist als auch Ausführungsformen, in welchen dies nur über einen Teil der Rotorlänge verwirklicht ist, insbesondere nur in einem zentralen Längsabschnitt.

Wie erwähnt umfassen die Verteilelemente Zähne, die von der Hohlwelle abstehen. Denkbar ist dabei, dass die Zähne in mindestens annähernd radialer Richtung von der Hohlwelle abragen oder aber in einem Winkel zur radialen Richtung. In der Regel sind die Zähne jeweils an einem von mehreren auf der Hohlwelle angeordneten, axial verlaufenden Flanschen fixiert.

Gemäss einer bevorzugten Ausführungsform schliesst die Scherkante mindestens eines Teils der Zähne bezogen zur Achsrichtung einen Winkel im Bereich von 0 bis 40° ein.

Abhängig von der jeweiligen Anwendung kann insbesondere bevorzugt sein, dass besagter Winkel im Bereich von 10 bis 30° liegt und im Speziellen bei ca. 20°. Gemäss dieser Ausführungsform erteilen somit auch die Verteilelemente dem zum behandelnden Material eine Förderkomponente in Richtung zum Materialauslass hin, wobei diese Förderkomponente geringer ist als diejenige der Förderelemente. Denkbar ist für diese Ausführungsform etwa, dass die Zähne ein proximales Teilstück aufweisen, welches in einer parallel zur Achsrichtung verlaufenden Ebene liegt und über welches die Zähne angeflanscht werden, und ein distales Teilstück, das in einer schräg zur Achsrichtung verlaufenden Ebene liegt und dessen radial äusseres Ende die Scherkante bildet.

Je nach Anwendung kann alternativ zu dieser Ausführungsform bevorzugt sein, dass die Scherkante mindestens eines Teils der Verteilelemente einen geringeren als den oben genannten Winkel einschliesst und insbesondere parallel zur Achsrichtung verläuft, d.h. bezogen zu dieser einen Winkel von ca. 0° einschliesst. Im letztgenannten Fall sind die Verteilelemente vollkommen förderneutral und haben ausschliesslich verteilende Funktion. Welche konkrete Konfiguration der Verteilelemente gewählt wird, hängt letztendlich vom zu behandelnden Material ab und kann innerhalb der erfindungsgemässen Definition variieren.

Was die Förderelemente betrifft, so umfassen diese mindestens eine Förderrippe, deren radiale Aussenkante bezogen zur Achsrichtung einen Winkel grösser als 45° einschliesst. Somit ist auch bei sehr hochviskosem Material die durch das Förderelement verliehene Förderkomponente ausreichend hoch, um eine gewünschte Förderrate durch die Behandlungskammer hindurch zu erhalten.

Vorzugsweise schliesst die radiale Aussenkante der Förderrippe bezogen zur Achsrichtung einen Winkel von höchstens 65° ein. Im Speziellen liegt der Winkel in einem Bereich von 50° bis 60°.

Nebst dem, dass die Förderwirkung eines Förderelementes durch den Anstellwinkel der radialen Aussenkante einer Förderrippe bestimmt wird, kann die Förderwirkung des Förderelementes zusätzlich über die Anzahl der Förderrippen bzw. den Abstand zwischen den in Achsrichtung aufeinanderfolgenden Förderrippen eingestellt werden.

Gemäss einer besonders bevorzugten Ausführungsform umfassen die Förderelemente jeweils ein wenigstens annähernd parallel zur Achsrichtung angeordnetes, winkelförmiges Stegblech, an dessen Aussenseite mindestens eine helikal verlaufende Förderrippe angeordnet ist. Durch die Winkelform wird das Stegblech somit in eine erste und zweite Stegblechfläche unterteilt, welche in zueinander schräg verlaufenden Ebenen liegen.

Nebst der Aussenkante der Förderrippe ergibt sich bei dieser Ausführungsform durch die Winkelform des Stegblechs eine in der Regel axial verlaufende Scherkante, welche gegenüber der radialen Aussenkante der Förderrippe zurückversetzt ist und somit im Vergleich zu dieser von der Behandlungsfläche in einem grösseren Abstand angeordnet ist. Somit trägt gemäss dieser Ausführungsform auch das Förderelement zu einer optimalen Verteilung des Materials auf der Behandlungsfläche bei.

Gemäss einer weiteren bevorzugten Ausführungsform sind in Umfangsrichtung des Rotors die Verteilelemente mit den Förderelementen alternierend angeordnet, da dadurch eine sehr homogene Verteilung des Materials auf der Behandlungsfläche gewährleistet werden kann.

Des Weiteren kann bevorzugt sein, im Bereich des Materialeinlasses die Streichelemente des Rotors lediglich als Förderelemente auszubilden, um insbesondere in diesem Bereich eine hohe Förderrate zu erzielen und damit einem Aufstauen von Material entgegenzuwirken.

Typischerweise liegt im Betrieb der Vorrichtung in der Behandlungskammer ein Druck im Bereich von 0.1 bis 0.5 Pa vor, um auch bei moderaten Temperaturen eine möglichst hohe Entgasungsrate zu erzielen.

Bei einem derart tiefen Betriebsdruck bzw. einem derart hohen Vakuum wird vorzugsweise eine Vorentgasungsstufe vorgesehen, die einen Grossteil der flüchtigen Bestandteile des zu behandelnden Materials abtrennt, bevor das Material in die Behandlungskammer eingeführt wird. Damit wird der Gasvolumenstrom in einem handhabbaren Mass gehalten. Vorzugsweise befindet sich das zu behandelnde Material unmittelbar vor der Einführung im Gleichgewicht mit der Gasphase.

Selbstverständlich kann je nach Anwendungsfall der Betriebsdruck der Vorrichtung auch höher sein, wenn sich dadurch eine gute Behandlung, insbesondere eine ausreichende Entgasung, gewährleisten lässt.

Aufgrund dessen, dass das Material bei der Einführung in die Behandlungskammer einer starken Druckverminderung ausgesetzt wird, können nichtsdestotrotz gasförmige Komponenten (im Zuge einer sogenannten "Flash"-Verdampfung) instantan aus dem Material entweichen, was wiederum zu einem Mitriss von Material führen kann. Um zu vermeiden, dass mitgerissenes Material auf die Hohlwelle und letztendlich in den Kondensationsraum gelangen und das Kondensat verunreinigen kann, weist die Vorrichtung gemäss einer bevorzugten Ausführungsform im Bereich des Materialeinlasses einen die Hohlwelle vollständig umgebenden Spritzschutzmantel auf.

Dabei wird gemäss einer möglichst einfachen und daher bevorzugten Ausführungsform der Spritzschutzmantel von den Förderelementen und von jeweils zwei in Umfangsrichtung aufeinanderfolgenden, Förderelemente verbindenden Blechen gebildet. Für die oben genannte Ausführungsform, in welcher die Förderelemente jeweils ein winkelförmiges Stegblech mit mindestens einer an der Aussenseite helikal verlaufenden Förderrippe umfassen, kann somit eine erste Dachseite eines ersten Förderelements mit der zweiten Dachseite eines in Rotationsrichtung dem ersten Förderelement vorauslaufenden zweiten Förderelements verbunden werden, wie im Zusammenhang mit den Figuren weiter ausgeführt wird.

Um auch im Bereich des Materialauslasses ein Aufstauen von Material zu verhindern, sind gemäss einer weiteren bevorzugten Ausführungsform auch in diesem Bereich die Streichelemente des Rotors lediglich als Förderelemente ausgebildet.

In der Regel liegt die Anzahl an in Umfangsrichtung verteilten Streichelementen zwischen 4 und 80, bevorzugt zwischen 6 und 48, und beträgt am meisten bevorzugt zwischen 8 und 32. Dadurch kann eine sehr gute Förderung und Verteilung des Materials während seiner Behandlung auf der Behandlungsfläche erzielt werden. Die optimale Anzahl an Streichelementen hängt dabei von der jeweiligen Anwendung und von der Grösse bzw. dem Durchmesser des Rotors ab.

Wie ebenfalls im Rahmen der Figuren ausgeführt wird, weist gemäss einer besonders bevorzugten Ausführungsform der Rotor zwischen dem Einlassbereich und dem Auslassbereich, in welchen sämtliche Streichelemente als Förderelement ausgestaltet sind, einen Zentralbereich auf, über den sich Förderelemente in axialer Fortsetzung eines Teils der Förderelemente des Einlassbereichs hin erstrecken. Diese alternieren im Zentralbereich jeweils mit einem Verteilelement, welches jeweils ebenfalls in axialer Fortsetzung zu einem Förderelement des Einlassbereichs angeordnet ist.

Wie erwähnt ist der Kondensator erfindungsgemäss in einem Kondensationsraum angeordnet, der von der Hohlwelle umschlossen wird.

Gemäss einer besonders bevorzugten Ausführungsform umfasst der Kondensator ein Innenrohr und ein das Innenrohr konzentrisch umgebendes Aussenrohr. Sowohl das Aussenrohr als auch das Innenrohr weisen jeweils eine Aussenwand und eine Innenwand auf, die mindestens bereichsweise voneinander beabstandet sind und derart im Innenrohr einen Innenrohr-Kühlmediumzirkulationskanal und im Aussenrohr einen Aussenrohr-Kühlmediumzirkulationskanal bilden. Dabei sind der Innenrohr-Kühlmediumzirkulationskanal und der Aussenrohr-Kühlmediumzirkulationskanal miteinander strömungsverbunden. Dabei ist der Kondensator in der Regel derart ausgestaltet, dass in einen der beiden Kühlmediumzirkulationskanäle, also z.B. in den Aussenrohr-Kühlmediumzirkulationskanal, eine Kühlmediumzuleitung mündet und vom jeweils anderen Kühlmediumzirkulationskanal, also im genannten Beispiel vom Innenrohr-Kühlmediumzirkulationskanal, ein Kühlmediumauslass wegführt. Typischerweise sind die Kühlmediumzuleitung und der Kühlmediumauslass in einem unteren Bereich des Kondensators angeordnet und die Verbindung zwischen den Kühlmediumzirkulationskanälen in einem oberen Bereich. Somit strömt das Kühlmedium im Betrieb von einem unteren Bereich des einen Aussen/Innenrohrs nach oben, tritt in einem oberen Bereich in das jeweils andere Rohr über und strömt von dort im Innen- bzw. Aussenrohrs nach unten.

Denkbar ist weiter, dass das Innenrohr und das Aussenrohr jeweils aus einer Platte gebildet werden, in welcher die Innenwand mit der Aussenwand punktuell miteinander verschweisst sind, wobei das sich zwischen der Innenwand und der Aussenwand ergebende Hohlkissen als Kühlmediumzirkulationskanal dient. Für die Schweissverbindung können dabei Schweisskreise vorgesehen sein, während am jeweils oberen und unteren Ende der Platte das Hohlkissen in der Regel über umlaufende Nähte abgeschlossen ist. Dies erlaubt eine sehr leichte und kompakte, aber nichtsdestotrotz sehr stabile Ausgestaltung des Kondensators.

Weiter sind im Aussenrohr in der Regel Fenster angeordnet, welche gewährleisten sollen, dass die gasförmigen Komponenten zur Kondensation auch an das Innenrohr gelangen können. Die Fenster sind dabei vorzugsweise in Längs- und in Umfangsrichtung gleichmässig angeordnet.

Im Vergleich zu von der Erfindung ebenfalls mitumfassten Vorrichtungen, in welchen der Kondensator als Rohrbündelkondensator ausgebildet ist, ergeben sich für die oben genannte besonders bevorzugte Ausgestaltung des Kondensators verbesserte statische Eigenschaften, was gerade im Hinblick auf ein gegenüber herkömmlichen Vorrichtungen erhöhtes L/D-Verhältnis der auf die Behandlung sehr hochviskoser Materialien ausgerichteten erfindungsgemässen Vorrichtung besonders vorteilhaft ist.

Ein Rohrbündelkondensator kann etwa bei sehr grossen Vorrichtungen bevorzugt sein, wobei die Verwendung eines Rohrbündelkondensators auch für kleinere Vorrichtungen nicht ausgeschlossen ist. Vorzugsweise sind die Rohre des Rohrbündelkondensators in zwei konzentrischen Reihen blickdicht versetzt zueinander angeordnet.

Gemäss einer weiteren bevorzugten Ausführungsform der erfindungsgemässen Vorrichtung weist das Gehäuse einen Vakuumanschluss auf, welcher derart ausgestaltet ist, ein Vakuum direkt am Kondensationsraum, d.h. am Innenraum der Hohlwelle anzulegen. Dabei ist besonders bevorzugt, dass der Vakuumanschluss in einen Oberteil des Gehäuses mündet, welcher mit dem Kondensationsraum strömungsverbunden ist und gegenüber der Behandlungskammer abgedichtet ist, wobei für die Abdichtung insbesondere eine rotierende Labyrinthdichtung vorgesehen werden kann.

Insbesondere im Zusammenhang mit der oben genannten Ausführungsform, gemäss welcher im Bereich des Materialeinlasses ein die Hohlwelle vollständig umgebender Spritzschutzmantel vorliegt, kann somit gewährleistet werden, dass in diesem Bereich das Material im Gleichstrom geführt wird und dass lediglich gasförmige Komponenten abgezogen werden, die den Kondensationsraum passiert haben und somit unter den gegebenen Bedingungen nicht kondensierbar sind (d.h. leichtflüchtige Komponenten darstellen). Dies resultiert letztendlich in einer hohen Kondensationsrate der niedriger siedenden Komponenten des behandelten Materials.

Der Rotor ist in der Regel fliegend gelagert. Gemäss einer bevorzugten Ausführungsform weist er in seinem materialauslassseitigen, d.h. unteren Endbereich mindestens zwei achsensymmetrisch angeordnete Lagerschuhe auf und wird radial von einem Lagerring des Gehäuses geführt, welcher zusammen mit den Lagerschuhen ein materialgeschmiertes Lager bildet.

Die Lagerschuhe sind dabei vorzugsweise in einer Art und Weise ausgestaltet, während der Rotation des Rotors Material in den radialen Spalt zwischen Lagerring und Lagerschuh zu drücken. Weiter ist bevorzugt, dass zwischen den Lagerschuhen zusätzlich Förderelemente angeordnet sind, insbesondere Förderelemente gemäss obiger Beschreibung umfassend ein winkelförmiges Stegblech mit mindestens eine an dessen Aussenseite helikal verlaufende Förderrippe. Dadurch wird gewährleistet, dass der Materialtransport durch die radiale Rotorführung bzw. das Lager mindestens annähernd beibehalten werden kann.

Durch die radiale Führung im unteren Bereich des Rotors werden Vorrichtungen mit einem gegenüber herkömmlichen Kurzwegverdampfern sehr hohen L/D-Verhältnis ermöglicht, was gerade im Hinblick darauf, dass die erfindungsgemässe Vorrichtung auf die Behandlung sehr hochviskoser Materialien ausgerichtet ist, besonders vorteilhaft ist.

In der Regel liegt der Materialeinlass der erfindungsgemässen Vorrichtung in Form eines tangential zum Gehäuse ausgerichteten Anschlusses vor; dies im Unterschied zu vorbekannten Kurzwegverdampfern, wie etwa demjenigen gemäss EP 2 039 409, in welchem die Materialzuführung von oben, also durch den die Behandlungskammer oben abschliessenden Deckel erfolgt.

Was den Materialauslass betrifft, so ist dieser vorzugsweise in Form einer sich in Achsrichtung an die Behandlungskammer anschliessenden, also zentral angeordneten, Austragsvorrichtung ausgebildet. Diese kann etwa in Form eines Trichters mit einem konischen Zulaufbehälter und einer standgeregelten Pumpe vorliegen. Damit unterscheidet sich die erfindungsgemässe Vorrichtung weiter von vorbekannten Kurzwegverdampfern, wie etwa dem in EP 2 039 409 gezeigten, in welchen das Material seitlich, in der Regel über eine Tasse, aus der Behandlungskammer ausgeführt wird.

Gemäss einer besonderen Ausführungsform kann eine von unten angebaute und angetriebene Austragshilfe, insbesondere eine Förderschnecke, vorgesehen sein, welche das Produkt einer seitlich angeordneten Pumpe zuführt. Gemäss einer weiteren besonderen Ausführungsform ist denkbar, die Austragshilfe direkt an das beschriebene Lager anzuschliessen und mit der gleichen Drehzahl wie der Rotor das behandelte Material einer unten angeordneten Austragspumpe zuzuführen.

Damit wird auch bei einer sehr hohen Viskosität des fertig behandelten, auszutragenden Materials eine relativ hohe Austragsförderrate gewährleistet und ein Aufstauen vor dem Materialauslass minimiert oder verhindert.

Um nichtsdestotrotz sicherzustellen, dass sich allfällig aufstauendes Material nicht an den Kondensator gelangen und den Kondensatauslass verstopfen kann, weist die Vorrichtung gemäss einer weiteren bevorzugten Ausführungsform ein den Kondensator konzentrisch umgebendes statisches Abdeckblech auf. So wird Material, welches bei einem unzureichenden Materialaustrag nach oben gedrückt wird, durch das Abdeckblech vom Kondensator ferngehalten. Hierfür kann bevorzugt sein, dass sich das Abdeckblech nach oben hin konisch verjüngt. Es ist aber auch ein zylindrisches Abdeckblech denkbar.

Insbesondere hinsichtlich der Ausführungsform, in welcher das Abdeckblech zylindrisch ausgebildet ist, ist weiter bevorzugt, dass auf der Höhe des Abdeckblechs der Rotor auf seiner Innenseite eine als Gegenstück zum Abdeckblech ausgebildete Buchse mit einer darauf innenseitig aufgebrachten Förderwendel aufweist. Diese Buchse rotiert somit mit dem Rotor. Die Förderwendel weist eine Förderrichtung nach unten, d.h. zum Materialauslass hin, auf. Der Spalt zwischen der Buchse und dem Abdeckblech ist dabei geringer als der weiter oben ausgebildete Spalt zwischen dem Rotor und dem Kondensator, womit die Förderwendel in einem relativ kurzen Abstand zum Abdeckblech läuft und wodurch letztendlich eine sehr effektive Materialförderung nach unten und eine gute Abdichtung des Kondensatauslasses gewährleistet werden kann.

Nebst der oben beschriebenen Vorrichtung betrifft die vorliegende Erfindung gemäss einem weiteren Aspekt eine Vorrichtung zur thermischen Behandlung von viskosem Material, insbesondere zur thermischen Auftrennung von in viskosem Material enthaltenen Materialkomponenten, umfassend ein Gehäuse mit einem beheizbaren Gehäusemantel, welcher eine Behandlungskammer umschliesst und eine rotationssymmetrische, sich in Achsrichtung erstreckende Behandlungsfläche bildet, einen in einem Einlassbereich des Gehäuses angeordneten Materialeinlass zum Einführen des zu behandelnden Materials in die Behandlungskammer, einen in einem Auslassbereich des Gehäuses angeordneten Materialauslass zum Austragen des Materials aus der Behandlungskammer, und einen in der Behandlungskammer angeordneten und sich koaxial erstreckenden, antreibbaren Rotor zur Erzeugung eines Materialfilms auf der Behandlungsfläche, wobei der Rotor eine Hohlwelle umfasst, über deren Umfang verteilt Streichelemente angeordnet sind, deren radial äusserstes Ende von der Behandlungsfläche beabstandet ist, wobei die Hohlwelle einen Kondensationsraum umschliesst, in welchem ein Kondensator angeordnet ist, und Durchlassöffnungen aufweist, durch welche bei der thermischen Behandlung aus dem Material entweichende gasförmige Materialkomponenten in den Kondensationsraum gelangen können, dadurch gekennzeichnet, dass der Kondensator ein Innenrohr und ein das Innenrohr konzentrisch umgebendes Aussenrohr umfasst, welche jeweils eine Aussenwand und eine Innenwand aufweisen, die mindestens bereichsweise voneinander beabstandet sind und derart im Innenrohr einen Innenrohr-Kühlmediumzirkulationskanal und im Aussenrohr einen Aussenrohr-Kühlmediumzirkulationskanal bilden, und der Innenrohr-Kühlmediumzirkulationskanal und der Aussenrohr-Kühlmediumzirkulationskanal miteinander strömungsverbunden sind.

Dieser Aspekt der Erfindung erlaubt es, eine Vorrichtung zur Verfügung zu stellen, welche im Vergleich zu Vorrichtungen, in welchen der Kondensator als Rohrbündelkondensator ausgebildet ist, verbesserte statische Eigenschaften aufweist. Insbesondere werden Vorrichtungen mit einem gegenüber herkömmlichen Vorrichtungen erhöhten L/D-Verhältnis ermöglicht, was gerade hinsichtlich der Anwendung der Vorrichtung zur Behandlung sehr hochviskoser Materialien eine optimale Behandlung des Materials ermöglicht.

Gemäss einem weiteren Aspekt betrifft die vorliegende Erfindung im Übrigen eine Vorrichtung zur thermischen Behandlung von viskosem Material, insbesondere zur thermischen Auftrennung von in viskosem Material enthaltenen Materialkomponenten, umfassend ein Gehäuse mit einem beheizbaren Gehäusemantel, welcher eine Behandlungskammer umschliesst und eine rotationssymmetrische, sich in Achsrichtung erstreckende Behandlungsfläche bildet, einen in einem Einlassbereich des Gehäuses angeordneten Materialeinlass zum Einführen des zu behandelnden Materials in die Behandlungskammer, einen in einem Auslassbereich des Gehäuses angeordneten Materialauslass zum Austragen des Materials aus der Behandlungskammer, und einen in der Behandlungskammer angeordneten und sich koaxial erstreckenden, antreibbaren Rotor zur Erzeugung eines Materialfilms auf der Behandlungsfläche, wobei der Rotor eine Hohlwelle umfasst, über deren Umfang verteilt Streichelemente angeordnet sind, deren radial äusserstes Ende von der Behandlungsfläche beabstandet ist, wobei die Hohlwelle einen Kondensationsraum umschliesst, in welchem ein Kondensator angeordnet ist, und Durchlassöffnungen aufweist, durch welche bei der thermischen Behandlung aus dem Material entweichende gasförmige Materialkomponenten in den Kondensationsraum gelangen können, dadurch gekennzeichnet, dass die Vorrichtung im Bereich des Materialeinlasses einen die Hohlwelle vollständig umgebenden Spritzschutzmantel aufweist.

Wie oben dargelegt wird dadurch vermieden, dass Material, welches bei der Einführung in die Behandlungskammer durch eine Flash-Verdampfung mitgerissen wird, auf die Hohlwelle und letztendlich in den Kondensationsraum gelangen und das Kondensat verunreinigen kann.

Gemäss einem weiteren Aspekt betrifft die Erfindung eine Vorrichtung zur thermischen Behandlung von viskosem Material, insbesondere zur thermischen Auftrennung von in viskosem Material enthaltenen Materialkomponenten, umfassend ein Gehäuse mit einem beheizbaren Gehäusemantel, welcher eine Behandlungskammer umschliesst und eine rotationssymmetrische, sich in Achsrichtung erstreckende Behandlungsfläche bildet, einen in einem Einlassbereich des Gehäuses angeordneten Materialeinlass zum Einführen des zu behandelnden Materials in die Behandlungskammer, einen in einem Auslassbereich des Gehäuses angeordneten Materialauslass zum Austragen des Materials aus der Behandlungskammer, und einen in der Behandlungskammer angeordneten und sich koaxial erstreckenden, antreibbaren Rotor zur Erzeugung eines Materialfilms auf der Behandlungsfläche, wobei der Rotor eine Hohlwelle umfasst, über deren Umfang verteilt Streichelemente angeordnet sind, deren radial äusserstes Ende von der Behandlungsfläche beabstandet ist, wobei die Hohlwelle einen Kondensationsraum umschliesst, in welchem ein Kondensator angeordnet ist, und Durchlassöffnungen aufweist, durch welche bei der thermischen Behandlung aus dem Material entweichende gasförmige Materialkomponenten in den Kondensationsraum gelangen können, und die Streichelemente mindestens teilweise als Förderelemente ausgestaltet sind, welche dem Material eine Förderkomponente in Richtung vom Materialeinlass zum Materialauslass hin verleihen, dadurch gekennzeichnet, dass das Gehäuse einen Vakuumanschluss aufweist, welcher derart ausgestaltet ist, Vakuum direkt am Kondensationsraum, d.h. am Innenraum der Hohlwelle anzulegen, insbesondere dass der Vakuumanschluss in einen Oberteil des Gehäuses mündet, welcher mit dem Kondensationsraum strömungsverbunden ist und gegenüber der Behandlungskammer abgedichtet ist.

Somit kann eine Vorrichtung zur Verfügung gestellt werden, mit welcher lediglich gasförmige Komponenten abgezogen werden, die den Kondensationsraum passiert haben, was letztendlich in einer hohen Kondensationsrate der niedriger siedenden Komponenten des behandelten Materials resultiert.

Für alle der beschriebenen weiteren Aspekte der Erfindung gelten die für den ersten Aspekt als bevorzugt genannten Merkmale gleichermassen als bevorzugt.

Die Erfindung wird anhand der anliegenden Figuren weiter veranschaulicht.

Es zeigt:
- Fig. 1: eine Vorrichtung gemäss der vorliegenden Erfindung, wobei der Anschaulichkeit halber der Gehäusemantel und die Hohlwelle insoweit aus der Darstellung entfernt wurden, um den Blick auf den Kondensator freizugeben;
- Fig. 2: eine Ansicht des Rotors der Vorrichtung gemäss Fig. 1;
- Fig. 3: eine perspektivische Ansicht einer oberhalb des Materialeinlasses quer zur Achsrichtung geschnittenen Vorrichtung gemäss der vorliegenden Erfindung;
- Fig. 4: einen Querschnitt durch die Vorrichtung gemäss Fig. 3 auf der Höhe des Materialeinlasses;
- Fig. 5: eine Detailansicht der in Fig. 4 gezeigten Förderelemente;
- Fig. 6: eine Ansicht des Kondensators der Vorrichtung gemäss Fig. 1;
- Fig. 7: den in Fig. 6 gezeigten Kondensator im Querschnitt;
- Fig. 8: den in Fig. 6 gezeigten Kondensator im Längsschnitt entlang den in Fig. 7 gezeigten Schnittebenen;
- Fig. 9: einen vergrösserten Längsschnitt des untersten Teils des in Fig. 6 gezeigten Kondensators; und
- Fig. 10: eine perspektivische Ansicht des materialauslassseitigen Endbereichs des Rotors.

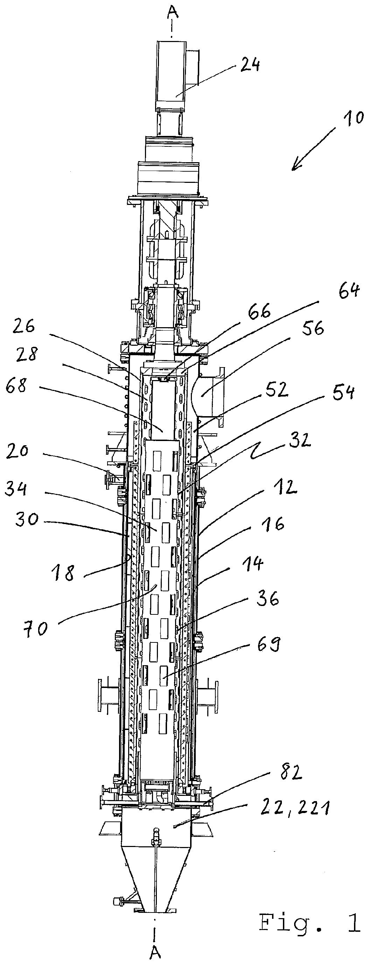

Wie in Fig. 1 gezeigt, umfasst die erfindungsgemässe Vorrichtung 10 ein vertikal ausgerichtetes Gehäuse 12 mit einem beheizbaren Gehäusemantel 14, welcher eine Behandlungskammer 16 umschliesst und auf seiner Innenseite eine rotationssymmetrische, sich in Achsrichtung A erstreckende Behandlungsfläche 18 bildet.

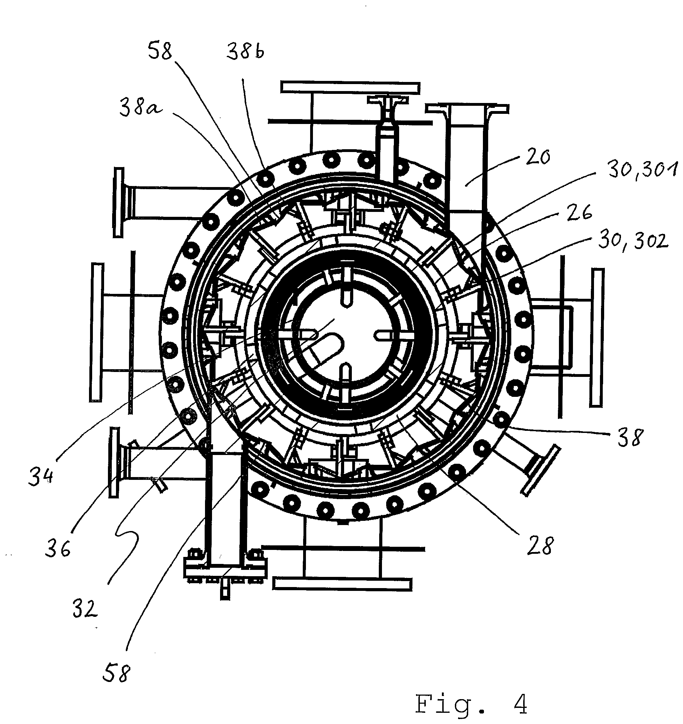

Die Vorrichtung umfasst zudem einen durch den Gehäusemantel 14 hindurchführenden Materialeinlass 20 zum Einführen des zu behandelnden Materials in die Behandlungskammer 16 sowie einen Materialauslass 22. Der tangential zum Gehäusemantel ausgerichtete Materialeinlass 20 ist im Übrigen z.B. in Fig. 4 gezeigt.

In der Behandlungskammer 16 ist ein sich koaxial erstreckender, über eine Antriebseinheit 24 antreibbarer Rotor 26 angeordnet. Dieser umfasst eine Hohlwelle 28 und über deren Umfang verteilt angeordnete, von der Hohlwelle 28 abstehende Streichelemente 30. Dabei ist das radial äusserste Ende der Streichelemente 30 von der Behandlungsfläche 18 beabstandet, um im Betrieb, d.h. während der Rotation des Rotors 26, das Material zu einem dünnen Materialfilm auf der Behandlungsfläche 18 auszustreichen.

Die Hohlwelle 28 umschliesst einen Kondensationsraum 32, in welchem ein statischer Kondensator 34 angeordnet ist, und weist Durchlassöffnungen 36 auf, durch welche bei der thermischen Behandlung aus dem Material entweichende gasförmige Materialkomponenten in den Kondensationsraum 32 gelangen, um dort am Kondensator 34 kondensieren zu können.

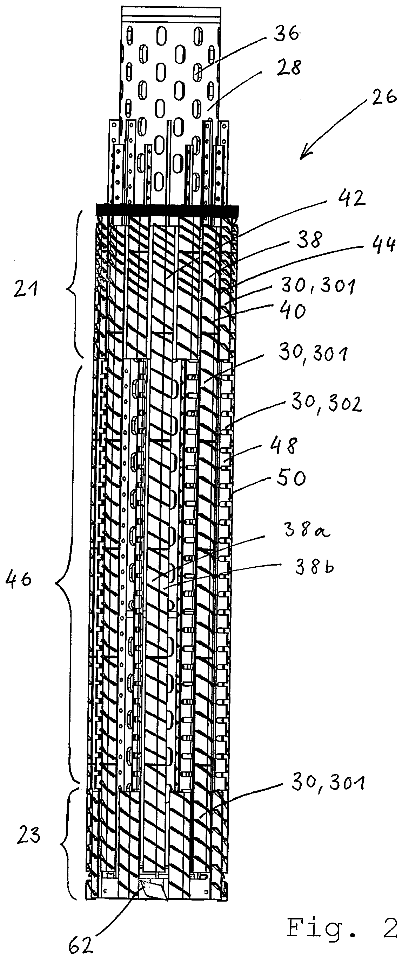

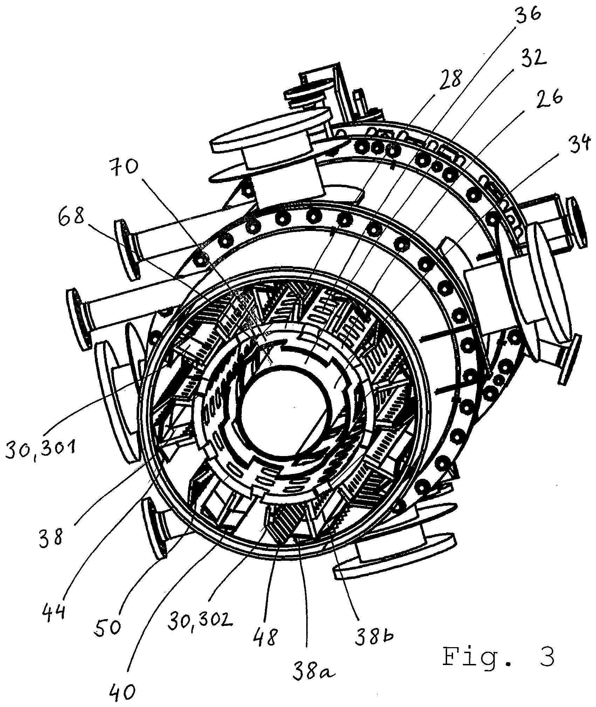

In dem in den Fig. 2 bis 4 gezeigten Rotor 26 sind die Streichelemente in insgesamt 16 parallel zur Achsrichtung verlaufenden Reihen über den Umfang der Hohlwelle 28 verteilt angeordnet.

In einem Einlassbereich 21, d.h. in einem Bereich des Rotors 26 auf der Höhe des Materialeinlasses 20, und in einem Auslassbereich 23 sind sämtliche Streichelemente 30 als Förderelement 301 ausgestaltet, welche dem Material eine Förderkomponente in Richtung vom Materialeinlass 20 zum Materialauslass 22 hin verleihen. Konkret umfassen die Förderelemente 301 ein winkelförmiges Stegblech 38, an deren Aussenseite helikal verlaufende Förderrippen 40 angeordnet sind.

Die Aussenkante dieser Förderrippen 40 schliesst in der gezeigten Ausführungsform bezogen zur Achse des Rotors einen Winkel von ca. 60° ein.

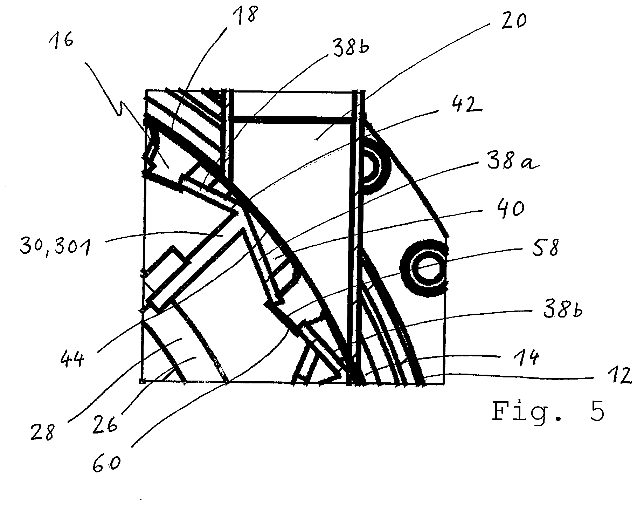

Zudem bildet die Dachspitze des Stegblechs 38 eine axial verlaufende Scherkante 42, welche gegenüber der radialen Aussenkante 44 der Förderrippe 40 zurückversetzt ist und somit im Vergleich zu dieser von der Behandlungsfläche 18 in einem grösseren Abstand angeordnet ist, wie insbesondere in Fig. 5 gezeigt wird. Konkret ist die Dachspitze des Stegblechs 38 bzw. die Scherkante 42 des Förderelements 301 in der gezeigten Ausführungsform ca. 5 mm von der Behandlungsfläche 18 beabstandet, während der Abstand der radialen Aussenkante 44 der Förderrippe 40 von der Behandlungsfläche nur ca. 3 mm beträgt.

Zwischen dem Einlassbereich 21 und dem Auslassbereich 23, in welchem sämtliche Streichelemente 30 als Förderelement 301 ausgestaltet sind, ist ein Zentralbereich 46 angeordnet. In diesem sind lediglich die Hälfte der in Umfangsrichtung verteilten Streichelemente, d.h. im konkreten Fall 8 Streichelemente, in axialer Fortsetzung des jeweiligen Förderelements des Einlassbereichs 21, als Förderelemente 301 ausgebildet. Diese alternieren jeweils mit einem Verteilelement 302, welches jeweils ebenfalls in axialer Fortsetzung zu einem Förderelement 301 des Einlassbereichs 21 angeordnet ist.

Die Verteilelemente 302 ragen radial von der Hohlwelle ab und umfassen in der gezeigten Ausführungsform eine Vielzahl von axial nacheinander angeordneten Zähnen 48. Dabei bildet das radial äusserste Ende der Zähne 48 jeweils eine Scherkante 50, welche parallel zur Achse A des Rotors 26 verläuft. Somit fällt dem Verteilelement 302 primär eine Verteilfunktion mit vernachlässigbarer bzw. nicht vorhandener Förderfunktion zu, während dem in Umfangsrichtung nachfolgenden Förderelement 301 primär eine Förderfunktion zukommt und sekundär - durch die Scherkante 42 des Stegbleches - eine Verteilfunktion. Die aufgrund der axialen Ausrichtung förderneutrale Scherkante 50 der Zähne ist dabei in einem geringeren Abstand von der Behandlungsfläche 18 angeordnet, als dies für die Scherkante 42 des Stegblechs der Förderelemente der Fall ist, wie bereits erwähnt wurde und wie insbesondere in Fig. 5 gezeigt wird. Aufgrund des sich ergebenden engeren Spalts für das Ausstreichen des Materials sind die Verteilelemente 302 somit höher scherend als die Förderelemente 301.

Nebst der Behandlungskammer 16 weist das Gehäuse 12 einen oberhalb davon angeordneten und gegenüber der Behandlungskammer abgedichteten Oberteil 52 auf, in welchen der Rotor 26 und der Kondensator 34 hineinragen. Konkret ist für die Abdichtung zwischen Behandlungskammer 16 und Oberteil 52 etwa eine rotierende Labyrinthdichtung 54 denkbar.

In den Oberteil 52 des Gehäuses 12 mündet ein Vakuumanschluss 56. Somit wird in dieser Ausführungsform das Vakuum direkt an dem mit dem Vakuumanschluss 56 strömungsverbundenen Kondensationsraum 32 angelegt, nicht aber an der gegenüber dem Oberteil 52 abgedichteten Behandlungskammer 16. Somit passieren sämtliche über den Vakuumanschluss 56 abgezogenen gasförmige Komponenten den Kondensationsraum 32, was zu einer sehr hohen Ausbeute an zu kondensierenden tiefersiedenden Materialkomponenten führt.

Im Übrigen sind im Einlassbereich 21 jeweils zwei in Umfangsrichtung aufeinanderfolgende Förderelemente 301 mit einem Verbindungsblech 58 verbunden, wie insbesondere in den Fig. 4 und 5 gezeigt wird. Konkret ist eine erste Dachseite 38a des Stegblechs eines ersten Förderelements mit der zweiten Dachseite 38b des Stegbleches eines in Rotationsrichtung dem ersten Förderelement vorauslaufenden zweiten Förderelements verbunden.

Dadurch wird ein die Hohlwelle 28 vollständig umgebender Spritzschutzmantel 60 ausgebildet, welcher verhindert, dass Material, welches bei der Einführung in die Behandlungskammer einer "Flash-Verdampfung" ausgesetzt wird und von den instantan aus dem Material entweichenden gasförmigen Materialkomponenten mitgerissen werden kann, auf die Hohlwelle 28 bzw. in den Kondensationsraum 32 gelangen und letztendlich das Kondensat verunreinigen kann.

Im Bereich, in welchem ein Spritzschutzmantel 60 ausgebildet ist, werden das Material und die bei der Behandlung entweichenden gasförmigen Materialkomponenten somit im Gleichstrom geführt, während in dem in Förderrichtung daran anschliessenden Zentralbereich 46 und im Auslassbereich 23 das Material und die gasförmigen Materialkomponenten im Gegenstrom geführt werden. Somit wird nach einem in Förderrichtung ersten Bereich, in welchem der sich beim Eintritt in das hohe Vakuum bzw. der sich dadurch ergebenden "Flash-Verdampfung" Rechnung getragen wird, in einem zweiten Bereich eine optimale Entgasung erzielt, da ein Kontakt zwischen dem zum behandelnden Material und den angereicherten Brüden minimiert wird.

Der Rotor 26 der gezeigten Ausführungsform ist fliegend gelagert und wird im Auslassbereich 23 radial durch einen Lagerring (nicht gezeigt) geführt, welcher zusammen mit an der Hohlwelle 28 angeordneten, in Fig. 2 gezeigten Lagerschuhen 62 ein materialgeschmiertes Lager bildet. Zu diesem Zweck sind die Lagerschuhe in einer Art und Weise ausgestaltet, um während der Rotation des Rotors 26 Material in den radialen Spalt zwischen Lagerring und Lagerschuh zu drücken.

Wie erwähnt ist der Kondensator 34 in einem von der Hohlwelle 28 umgegebenen Kondensationsraum 32 angeordnet, welcher mit der Behandlungskammer 16 über Durchlassöffnungen 36 verbunden ist zwecks Durchlasses der bei der thermischen Behandlung aus dem Material entweichenden gasförmigen Materialkomponenten und letztendlich der Kondensation der in diesen Materialkomponenten enthaltenen schwererflüchtigen Stoffe.

Der stationär stehende Kondensator 34 wird über einen mittig angeordneten Zapfen 66 stabilisiert, welcher in einer die Hohlwelle 28 oben abschliessenden Platte 64 gehalten wird. In der konkret gezeigten Ausführungsform ist der Zapfen am oberen Ende des über das Aussenrohr hinausragenden Innenrohrs des Kondensators fixiert.

Konkret umfasst der Kondensator 34 ein Innenrohr 68 und ein das Innenrohr konzentrisch umgebendes Aussenrohr 70, wobei das Innenrohr 68 in der Höhe über das Aussenrohr 70 hinausragt und an seinem oberen Ende den erwähnten Zapfen 66 aufweist. Sowohl das Innenrohr 68 als auch das Aussenrohr 70 weisen jeweils eine Aussenwand 681 bzw. 701 und eine Innenwand 682 bzw. 702 auf, die bereichsweise voneinander beabstandet sind und derart einen Spalt für die Zirkulation eines Kühlmediums ausbilden. Somit wird im Innenrohr 68 ein Innenrohr-Kühlmediumzirkulationskanal 683 und im Aussenrohr 70 ein Aussenrohr-Kühlmediumzirkulationskanal 703 ausgebildet, wobei diese miteinander strömungsverbunden sind.

Zudem sind im Aussenrohr in Längs- und in Umfangsrichtung gleichmässig verteilte Fenster 69 angeordnet, welche gewährleisten, dass die gasförmigen Komponenten zur Kondensation auch an das Innenrohr 68 gelangen können.

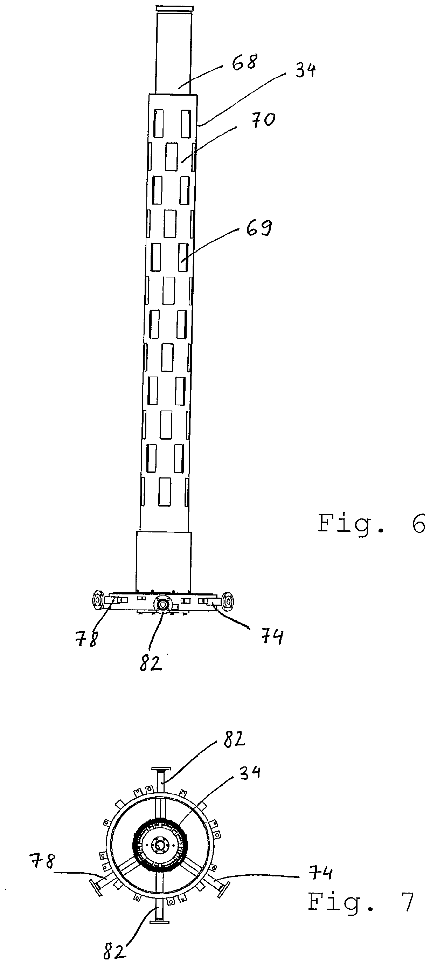

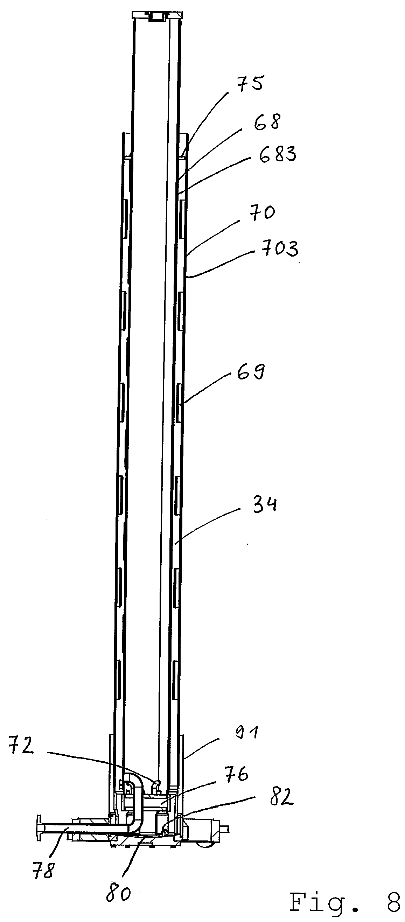

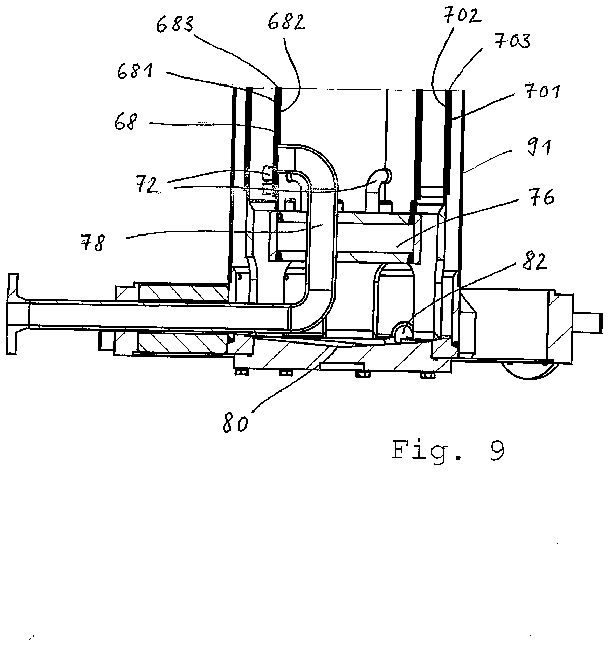

In der konkret gezeigten Ausführungsform bzw. der Detaildarstellung gemäss Fig. 9 münden im Auslassbereich Kühlmediumzuleitungen 72 von einem über einen Kühlmediumzulauf 74 gespeisten Kühlmediumreservoir 76 in den Aussenrohr-Kühlmediumzirkulationskanals 703. Von dort strömt das Kühlmedium nach oben, tritt über einen in Fig. 8 gezeigten Verbindungskanal 75 in den Innenrohr-Kühlmediumzirkulationskanal 683 über und strömt in diesem nach unten, bevor es über einen Kühlmediumauslass 78 aus dem Innenrohr-Kühlmediumzirkulationskanal 683 weggeführt wird. Der Kühlmediumzulauf 74 und der Kühlmediumauslass 78 führen dabei radial vom Gehäuse weg und sind um ca. 120° voneinander beabstandet, wie etwa in Fig. 7 in Zusammenschau mit Fig. 8 gezeigt ist. Während der Zirkulation des Kühlmediums wird Wärmeenergie von den gasförmigen Materialkomponenten über die Kondensatorfläche auf das Kühlmedium übertragen, was letztendlich zur Kondensation der schwererflüchtigen Stoffe auf der Kondensatorfläche führt.

Das dabei entstehende Kondensat fliesst auf der Kondensatorfläche nach unten und letztendlich auf den in Form einer Senke oder Wanne ausgebildeten Kondensatorboden 80, von wo es über entsprechende, von der untersten Stelle des Kondensatorbodens wegführende Kondensatauslässe 82 ausgetragen wird. Konkret sind in der gezeigten Ausführungsform die radial vom Gehäuse wegführenden Kondensatauslässe um 180° beabstandet, wie etwa in Fig. 7 gezeigt ist.

Um das nach der Behandlung vorliegende entgaste viskose Material aus dem Gehäuse auszuführen, ist der Materialauslass 22 in Form einer an die Behandlungskammer anschliessenden und an dieser angeflanschten Austragsvorrichtung 221 ausgestaltet.

Wie aus den Fig. 8 und 9 hervorgeht, weist die Vorrichtung zudem ein den Kondensator 34 konzentrisch umgebendes, statisches Abdeckblech 91 auf, welches in der gezeigten Ausführungsform zylindrisch ist. So wird Material, welches bei einem unzureichenden Materialaustrag nach oben gedrückt wird, durch das Abdeckblech 91 vom Kondensator 34 ferngehalten, wodurch letztendlich auch ein Verstopfen des Kondensatauslasses 82 verhindert werden kann.

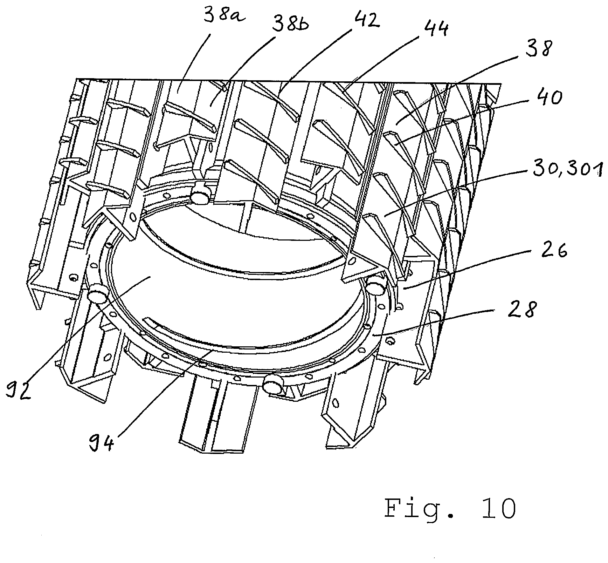

Wie in Fig. 10 gezeigt ist, weist der Rotor 26 auf seiner Innenseite eine Buchse 92 mit einer Förderwendel 94 mit Förderrichtung nach unten auf. Diese Buchse 92 ist auf derjenigen Höhe des Rotors 26 angeordnet, die der Höhe des in Fig. 8 und 9 gezeigten Abdeckblechs 91 entspricht, und als Gegenstück zum Abdeckblech ausgebildet. Der Spalt zwischen der Buchse 92 und dem Abdeckblech 91 ist dabei geringer ist als der weiter oben ausgebildete Spalt zwischen dem Rotor 26 und dem Kondensator 34. Während des Betriebs der Vorrichtung wird somit durch die mit dem Rotor rotierende Buchse 92 bzw. der Förderwendel 94 eine sehr effektive Materialförderung nach unten und damit eine gute Abdichtung des Kondensatauslasses 82 gewährleistet.

### Bezugszeichenliste

- 10: Vorrichtung
- 12: Gehäuse
- 14: Gehäusemantel
- 16: Behandlungskammer
- 18: Behandlungsfläche
- 20: Materialeinlass
- 21: Einlassbereich
- 22: Materialauslass
- 221: Austragstrichter
- 23: Auslassbereich
- 24: Antriebseinheit
- 26: Rotor
- 28: Hohlwelle
- 30: Streichelemente
- 301: Förderelement
- 302: Verteilelement
- 32: Kondensationsraum
- 34: Kondensator
- 36: Durchlassöffnungen
- 38: winkelförmiges Stegblech
- 38a, b: Dachseiten des Stegblechs
- 40: Förderrippe
- 42: Scherkante des Stegblechs
- 44: radiale Aussenkante der Förderrippe
- 46: Zentralbereich
- 48: Zahn des Verteilelements
- 50: Scherkante der Zähne
- 52: Oberteil
- 54: Labyrinthdichtung
- 56: Vakuumanschluss
- 58: (Verbindungs-)Blech
- 60: Spritzschutzmantel
- 62: Lagerschuh
- 64: Platte (oberer Abschluss der Hohlwelle)
- 66: Zapfen
- 68: Innenrohr
- 681: Aussenwand des Innenrohrs
- 682: Innenwand des Innenrohrs
- 683: Innenrohr-Kühlmediumzirkulationskanal
- 69: Fenster
- 70: Aussenrohr
- 701: Aussenwand des Aussenrohrs
- 702: Innenwand des Aussenrohrs
- 703: Aussenrohr-Kühlmediumzirkulationskanal
- 72: Kühlmediumzuleitung
- 74: Kühlmediumzulauf
- 76: Kühlmediumreservoir
- 78: Kühlmediumauslass
- 80: Kondensatorboden
- 82: Kondensatauslass
- 91: Abdeckblech
- 92: Buchse
- 94: Förderwendel
- A: Achsrichtung

## Patentansprüche

1. Vorrichtung zur thermischen Behandlung von viskosem Material, insbesondere zur thermischen Auftrennung von in viskosem Material enthaltenen Materialkomponenten, umfassend
ein Gehäuse (12) mit einem beheizbaren Gehäusemantel (14), welcher eine Behandlungskammer (16) umschliesst und eine rotationssymmetrische, sich in Achsrichtung (A) erstreckende Behandlungsfläche (18) bildet,
einen in einem Einlassbereich (21) des Gehäuses angeordneten Materialeinlass (20) zum Einführen des zu behandelnden Materials in die Behandlungskammer,
einen in einem Auslassbereich (23) des Gehäuses angeordneten Materialauslass (22) zum Austragen des Materials aus der Behandlungskammer, und
einen in der Behandlungskammer angeordneten und sich koaxial erstreckenden, antreibbaren Rotor (26) zur Erzeugung eines Materialfilms auf der Behandlungsfläche, wobei der Rotor eine Hohlwelle (28) umfasst, über deren Umfang verteilt Streichelemente (30) angeordnet sind, deren radial äusserstes Ende von der Behandlungsfläche beabstandet ist,
wobei die Hohlwelle einen Kondensationsraum (32) umschliesst, in welchem ein Kondensator (34) angeordnet ist, und Durchlassöffnungen (36) aufweist, durch welche bei der thermischen Behandlung aus dem Material entweichende gasförmige Materialkomponenten in den Kondensationsraum gelangen können, und die Streichelemente mindestens teilweise als Förderelemente (301) ausgestaltet sind, welche dem Material eine Förderkomponente in Richtung vom Materialeinlass zum Materialauslass hin verleihen,
**dadurch gekennzeichnet, dass** mindestens in einem Längsabschnitt des Rotors die Streichelemente teilweise als Förderelemente (301) ausgestaltet sind und teilweise als von der Hohlwelle abstehende Verteilelemente (302), welche Zähne (48) umfassen, deren Scherkante (50) bezogen zur Achsrichtung (A) einen Winkel kleiner als 45° einschliesst, und die Förderelemente (301) mindestens eine Förderrippe (40) umfassen, deren radiale Aussenkante (44) bezogen zur Achsrichtung (A) einen Winkel grösser als 45° einschliesst.

2. Vorrichtung gemäss Anspruch 1, **dadurch gekennzeichnet, dass** die Scherkante (50) mindestens eines Teils der Zähne (48) der Verteilelemente (302) bezogen zur Achsrichtung (A) einen Winkel im Bereich von 0 bis 40°, vorzugsweise von 10 bis 30°, und im Speziellen von ca. 20°, einschliesst.

3. Vorrichtung gemäss einem der vorhergehenden Ansprüche, **dadurch gekennzeichnet, dass** der von der radialen Aussenkante (44) bezogen zur Achsrichtung (A) eingeschlossene Winkel kleiner als 65° ist und im Speziellen im Bereich von 50° bis 60° liegt.

4. Vorrichtung gemäss einem der vorhergehenden Ansprüche, **dadurch gekennzeichnet, dass** die Förderelemente (301) jeweils ein parallel zur Achsrichtung (A) angeordnetes, winkelförmiges Stegblech (38) umfassen, an dessen Aussenseite mindestens eine helikal verlaufende Förderrippe (40) angeordnet ist.

5. Vorrichtung gemäss einem der vorhergehenden Ansprüche, **dadurch gekennzeichnet, dass** in Umfangsrichtung des Rotors (26) die Verteilelemente (302) mit den Förderelementen (301) alternieren.

6. Vorrichtung gemäss einem der vorhergehenden Ansprüche, **dadurch gekennzeichnet, dass** im Einlassbereich (21) und/oder im Auslassbereich (23) die Streichelemente lediglich als Förderelemente (301) ausgebildet sind.

7. Vorrichtung gemäss einem der vorhergehenden Ansprüche, **dadurch gekennzeichnet, dass** sie im Einlassbereich (21) einen die Hohlwelle (28) vollständig umgebenden Spritzschutzmantel (60) aufweist.

8. Vorrichtung gemäss Anspruch 7, **dadurch gekennzeichnet, dass** der Spritzschutzmantel (60) von Förderelementen (301) und von jeweils zwei in Umfangsrichtung aufeinanderfolgende Förderelemente verbindenden Blechen (58) gebildet ist.

9. Vorrichtung gemäss einem der vorhergehenden Ansprüche, **dadurch gekennzeichnet, dass** die Anzahl an in Umfangsrichtung verteilten Streichelementen (30) zwischen 4 und 80 liegt, bevorzugt zwischen 6 und 48, und am meisten bevorzugt zwischen 8 und 32.

10. Vorrichtung gemäss einem der vorhergehenden Ansprüche, **dadurch gekennzeichnet, dass** der Kondensator (34) ein Innenrohr (68) und ein das Innenrohr konzentrisch umgebendes Aussenrohr (70) umfasst, welche jeweils eine Aussenwand (681 bzw. 701) und eine Innenwand (682 bzw. 702) aufweisen, die mindestens bereichsweise voneinander beabstandet sind und derart im Innenrohr einen Innenrohr-Kühlmediumzirkulationskanal (683) und im Aussenrohr einen Aussenrohr-Kühlmediumzirkulationskanal (703) bilden, und der Innenrohr-Kühlmediumzirkulationskanal und der Aussenrohr-Kühlmediumzirkulationskanal miteinander strömungsverbunden sind.

11. Vorrichtung gemäss Anspruch 10, **dadurch gekennzeichnet, dass** in einen der beiden Kühlmediumzirkulationskanäle (683 bzw. 703) eine Kühlmediumzuleitung (72) mündet und vom jeweils anderen Kühlmediumzirkulationskanal (703 bzw. 683) ein Kühlmediumauslass (78) wegführt.

12. Vorrichtung gemäss einem der vorhergehenden Ansprüche, **dadurch gekennzeichnet, dass** das Gehäuse einen Vakuumanschluss (56) aufweist, welcher derart ausgestaltet ist, ein Vakuum direkt am Kondensationsraum (32) anzulegen.

13. Vorrichtung gemäss Anspruch 12, **dadurch gekennzeichnet, dass** der Vakuumanschluss (56) in einen Oberteil (52) des Gehäuses (12) mündet, welcher mit dem Kondensationsraum (32) strömungsverbunden ist und gegenüber der Behandlungskammer (16) abgedichtet ist.

14. Vorrichtung gemäss einem der vorhergehenden Ansprüche, **dadurch gekennzeichnet, dass** der Rotor (26) im Auslassbereich (23) mindestens zwei achsensymmetrisch angeordnete Lagerschuhe (62) aufweist und radial von einem Lagerring des Gehäuses geführt ist, welcher zusammen mit den Lagerschuhen (62) ein materialgeschmiertes Lager bildet.

15. Vorrichtung gemäss einem der vorhergehenden Ansprüche, **dadurch gekennzeichnet, dass** der Kondensator (34) im Auslassbereich (23) konzentrisch von einem statischen Abdeckblech (91) umgeben ist.

16. Vorrichtung gemäss einem der vorhergehenden Ansprüche, **dadurch gekennzeichnet, dass** der Materialauslass (22) in Form einer sich in Achsrichtung an die Behandlungskammer (16) anschliessenden Austragsvorrichtung (221) ausgebildet ist.

## Claims

1. A device for the thermal treatment of viscous material, in particular for the thermal separation of material components contained in viscous material, comprising
a housing (12) having a heatable housing jacket (14), which surrounds a treatment chamber (16) and forms a rotationally symmetrical treatment surface (18) extending in the axial direction (A),
a material inlet (20), which is arranged in an inlet region (21) of the housing, for introducing the material to be treated into the treatment chamber,
a material outlet (22), which is arranged in an outlet region (23) of the housing, for discharging the material out of the treatment chamber, and
a drivable rotor (26), which is arranged in the treatment chamber and extends coaxially, for producing a material film on the treatment surface, wherein the rotor comprises a hollow shaft (28), arranged in a manner distributed over the circumference of which are spreading elements (30), the radially outer end of which is spaced apart from the treatment surface,
wherein the hollow shaft surrounds a condensation space (32), in which a condenser (34) is arranged, and has through openings (36), through which gaseous material components escaping from the material during the thermal treatment can enter the condensation space, and at least some of the spreading elements are configured as delivery elements (301), which impart a delivery component to the material in the direction from the material inlet to the material outlet,
**characterized in that**, at least in a longitudinal section of the rotor, some of the spreading elements are configured as delivery elements (301) and some as distributing elements (302), which project from the hollow shaft and which comprise teeth (48), the shearing edge (50) of which encloses an angle of less than 45° relative to the axial direction (A), and the delivery elements (301) comprise at least one delivery rib (40), the radial outer edge (44) of which encloses an angle greater than 45° relative to the axial direction (A).

2. The device as claimed in claim 1, **characterized in that** the shearing edge (50) of at least some of the teeth (48) of the distributing elements (302) encloses an angle in a range of from 0 to 40°, preferably from 10 to 30°, and more specifically of about 20°, relative to the axial direction (A).

3. The device as claimed in one of the preceding claims, **characterized in that** the angle enclosed by the radial outer edge (44) relative to the axial direction (A) is less than 65° and more specifically in a range of from 50° to 60°.

4. The device as claimed in one of the preceding claims, **characterized in that** the delivery elements (301) each comprise an angular web plate (38), which is arranged parallel to the axial direction (A) and on the outer side of which at least one helically extending delivery rib (40) is arranged.

5. The device as claimed in one of the preceding claims, **characterized in that** the distributing elements (302) alternate with the delivery elements (301) in the circumferential direction of the rotor (26).

6. The device as claimed in one of the preceding claims, **characterized in that** the spreading elements are designed exclusively as delivery elements (301) in the inlet region (21) and/or and the outlet region (23) .

7. The device as claimed in one of the preceding claims, **characterized in that** said device has a spray protection jacket (60) completely surrounding the hollow shaft (28) in the inlet region (21).

8. The device as claimed in claim 7, **characterized in that** the spray protection jacket (60) is formed by delivery elements (301) and by plates (58), each of said plates connecting two circumferentially successive delivery elements.

9. The device as claimed in one of the preceding claims, **characterized in that** the number of spreading elements (30) distributed in the circumferential direction is between 4 and 80, preferably between 6 and 48, and most preferably between 8 and 32.

10. The device as claimed in one of the preceding claims, **characterized in that** the condenser (34) comprises an inner tube (68) and an outer tube (70) concentrically surrounding the inner tube, which each have an outer wall (681 and 701 respectively) and an inner wall (682 and 702 respectively), which are spaced apart from one another, at least in some region or regions, and in this way form an inner-tube cooling-medium circulation duct (683) in the inner tube and an outer-tube cooling-medium circulation duct (703) in the outer tube, and the inner-tube cooling-medium circulation duct and the outer-tube cooling-medium circulation duct are fluidically connected to one another.

11. The device as claimed in claim 10, **characterized in that** a cooling-medium feed line (72) opens into one of the two cooling-medium circulation ducts (683 or 703), and a cooling-medium outlet (78) leads away from the other cooling-medium circulation duct (703 or 683) in each case.

12. The device as claimed in one of the preceding claims, **characterized in that** the housing has a vacuum connection (56), which is configured in such a way as to apply a vacuum directly to the condensation space (32) .

13. The device as claimed in claim 12, **characterized in that** the vacuum connection (56) opens into an upper part (52) of the housing (12), which is fluidically connected to the condensation space (32) and is sealed off from the treatment chamber (16).

14. The device as claimed in one of the preceding claims, **characterized in that** the rotor (26) has at least two bearing shoes (62) arranged symmetrically with respect to the axis in the outlet region (23) and is guided radially by a bearing ring of the housing, which forms a material-lubricated bearing together with the bearing shoes (62).

15. The device as claimed in one of the preceding claims, **characterized in that** the condenser (34) is surrounded concentrically by a static cover plate (91) in the outlet region (23).

16. The device as claimed in one of the preceding claims, **characterized in that** the material outlet (22) is in the form of a discharge device (221) adjoining the treatment chamber (16) in the axial direction.

## Revendications

1. Dispositif pour le traitement thermique de matières visqueuses, en particulier pour la séparation thermique de composants matériels contenus dans des matières visqueuses, comprenant
une enceinte (12) dotée d'une enveloppe chauffante (14) qui entoure une chambre de traitement (16) et forme une surface de traitement (18) à symétrie de rotation s'étendant dans la direction axiale (A),
une entrée de matériau (20), disposée dans une zone d'entrée (21) de l'enceinte, pour introduire le matériau à traiter dans la chambre de traitement,
une sortie de matériau (22), disposée dans une zone de sortie (23) de l'enceinte, pour évacuer le matériau hors de la chambre de traitement, et
un rotor entraînable (26), disposé dans la chambre de traitement et s'étendant coaxialement, pour produire un film de matériau sur la surface de traitement, le rotor comprenant un arbre creux (28), sur la circonférence duquel arbre creux des éléments d'étalement (30) sont arrangés, dont l'extrémité radialement extérieure est espacée de la surface de traitement,
l'arbre creux entourant un espace de condensation (32), dans lequel un condenseur (34) est disposé, et comportant des ouvertures de passage (36), par lesquelles les composants gazeux du matériau s'échappant du matériau pendant le traitement thermique peuvent pénétrer dans l'espace de condensation, et au moins certains des éléments d'étalement sont configurés comme des éléments de transport (301), qui transmettent une composant de transport au matériau dans la direction allant de l'entrée du matériau à la sortie du matériau,
**caractérisé en ce qu'**au moins dans une section longitudinale du rotor, les éléments d'étalement sont en partie configurés comme des éléments de transport (301) et en partie comme des éléments de distribution (302) qui font saillie de l'arbre creux, et qui comprennent des dents (48) dont le bord de cisaillement (50) forme un angle inférieur à 45° par rapport à la direction axiale (A), et les éléments de transport (301) comprennent au moins une nervure de transport (40) dont le bord extérieur radial (44) forme un angle supérieur à 45° par rapport à la direction axiale (A).

2. Dispositif selon la revendication 1, **caractérisé en ce que** le bord de cisaillement (50) d'au moins certaines des dents (48) des éléments de distribution (302) forme un angle compris entre 0 et 40°, de préférence entre 10 et 30°, et plus particulièrement d'environ 20°, par rapport à la direction axiale (A).

3. Dispositif selon l'une des revendications précédentes, **caractérisé en ce que** l'angle formé par le bord extérieur radial (44) par rapport à la direction axiale (A) est inférieur à 65° et plus spécifiquement est compris entre 50° et 60°.

4. Dispositif selon l'une des revendications précédentes, **caractérisé en ce que** les éléments de transport (301) comprennent chacun une âme (38) angulaire, qui est disposée parallèlement à la direction axiale (A), et sur le côté extérieur de laquelle est disposée au moins une nervure de transport (40) s'étendant de manière hélicoïdale.

5. Dispositif selon l'une des revendications précédentes, **caractérisé en ce que** les éléments de distribution (302) alternent avec les éléments de transport (301) dans la direction circonférentielle du rotor (26).

6. Dispositif selon l'une des revendications précédentes, **caractérisé en ce que** les éléments d'étalement sont conçus exclusivement comme éléments de transport (301) dans la zone d'entrée (21) et/ou dans la zone de sortie (23).

7. Dispositif selon l'une des revendications précédentes, **caractérisé en ce que** ledit dispositif comporte une enveloppe de protection contre les pulvérisations (60) entourant complètement l'arbre creux (28) dans la zone d'entrée (21).

8. Dispositif selon la revendication 7, **caractérisé en ce que** l'enveloppe de protection contre les pulvérisations (60) est formée par des éléments de transport (301) et par chaque fois deux plaques (58) qui relient deux éléments de transport se succédant sur la circonférence.

9. Dispositif selon l'une des revendications précédentes, **caractérisé en ce que** le nombre d'éléments d'étalement (30) répartis dans la direction circonférentielle est compris entre 4 et 80, de préférence entre 6 et 48, et plus préférentiellement entre 8 et 32.

10. Dispositif selon l'une des revendications précédentes, **caractérisé en ce que** le condenseur (34) comprend un tube intérieur (68) et un tube extérieur (70) entourant concentriquement le tube intérieur, qui ont chacun une paroi extérieure (681 et 701 respectivement) et une paroi intérieure (682 et 702 respectivement), qui sont espacées l'une de l'autre au moins dans certaines régions, et forment ainsi un conduit de circulation du milieu de refroidissement du tube intérieur (683) dans le tube intérieur et un conduit de circulation du milieu de refroidissement du tube extérieur (703) dans le tube extérieur, et le conduit de circulation du milieu de refroidissement du tube intérieur et le conduit de circulation du milieu de refroidissement du tube extérieur sont reliés fluidiquement l'un à l'autre.

11. Dispositif selon la revendication 10, **caractérisé en ce qu'**une conduite d'alimentation en fluide de refroidissement (72) débouche dans l'un des deux conduits de circulation de fluide de refroidissement (683 ou 703), et une sortie de fluide de refroidissement (78) s'éloigne de l'autre conduit de circulation de fluide de refroidissement (703 ou 683) dans chaque cas.

12. Dispositif selon l'une des revendications précédentes, **caractérisé en ce que** l'enceinte comporte un raccord de vide (56), configuré de manière à appliquer un vide directement à l'espace de condensation (32).

13. Dispositif selon la revendication 12, **caractérisé en ce que** le raccord à vide (56) débouche dans une partie supérieure (52) de l'enceinte (12), qui est reliée fluidiquement à l'espace de condensation (32) et est scellée par rapport à la chambre de traitement (16) .

14. Dispositif selon l'une des revendications précédentes, **caractérisé en ce que** le rotor (26) comporte au moins deux patins (62) disposés symétriquement par rapport à l'axe dans la zone de sortie (23) et est guidé radialement par une bague de roulement de l'enceinte, qui forme avec les patins (62) un palier lubrifié par le matériau.

15. Dispositif selon l'une des revendications précédentes, **caractérisé en ce que** le condenseur (34) est entouré concentriquement par une plaque de couverture statique (91) dans la zone de sortie (23).

16. Dispositif selon l'une des revendications précédentes, **caractérisé en ce que** la sortie du matériau (22) se présente sous la forme d'un dispositif de décharge (221) adjacent à la chambre de traitement (16) dans la direction axiale.
